# EUROPEAN PATENT SPECIFICATION

(11) **EP 1 738 947 B1**
(45) Date of publication and mention of the grant of the patent: **23.12.2009**
(21) Application number: 06012976.4
(22) Date of filing: 23.06.2006
(51) Int. Cl.: B60K 6/20, B60L 1/00

(54) **Hybrid vehicle**
Hybridfahrzeug
Véhicule hybride

(30) Priority: 30.06.2005 JP 2005192602
(43) Date of publication of application: 03.01.2007
(73) Proprietor: Yamaha Hatsudoki Kabushiki Kaisha, Iwata-shi, Shizuoka-ken 438-8501 (JP)
(72) Inventor: Ikeda, Takeshi, Iwata-shi Shizuoka-ken 438-8501 (JP); Sasaki, Kaoru, Iwata-shi Shizuoka-ken 438-8501 (JP); Hashimoto, Kiyohi, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 199 205
- WO-A-2004/085187
- BE-A3- 1 012 081
- FR-A- 2 851 516
- FR-A- 2 861 336
- US-A- 4 823 554
- US-B1- 6 430 482
- US-B1- 6 484 830

## Description

The present invention relates to a hybrid vehicle, in particular a hybrid vehicle, having a plurality of power sources such as an engine and an electric motor.

Conventionally, as disclosed in, for example, JP-B-3486491, JP-B-Hei 5-22612 and JP-B-2558478, configurations are known in which the generator mounted in an engine-driven travel vehicle, which is run by driving the drive wheels by the power of the engine, is adapted to be capable of external output, thereby using the generator as a commercial-frequency power source for uses other than for running the vehicle.

JP-B-3486491 and JP-B-Hei 5-22612 each disclose a two-wheeled vehicle that is equipped with a generator used exclusively for external output separately from the generator used as a starter or the like. Further, JP-B-2558478 discloses an automobile equipped with a first power generation system for outputting high-voltage AC electric power for an electrical product with large electric power consumption, and a second power generation line for outputting low-voltage DC electric power through the operation of the engine irrespective of whether the automobile is running or at rest.

According to the travel vehicle such as the two-wheeled vehicle or automobile as disclosed in each of JP-B-3486491, JP-B-Hei 5-22612 and JP-B-2558478, an electrical device (mainly an electrical product; hereinafter, referred to as the "external device") such as lighting can be used on an outing site by using the generator equipped to the vehicle. Accordingly, when using an electrical device such as lightning on an outing site reached by the travel vehicle, it is not necessary to carry a separate generator dedicated to the external device, thereby achieving an improvement in convenience.

From an environmental standpoint, it has been increasingly desired in recent years to make the amount of environmental pollutants emitted from engine-driven vehicles as small as possible. In view of this, as an altemative to an engine-driven vehicle, there have been developed hybrid vehicles mounted with an electric motor for driving wheels in addition to an engine, the drive wheels being driven by the electric motor.

As an example of hybrid vehicles, there is known a series hybrid vehicle in which the engine is driven by the generator, and the drive motor for driving the drive wheels is driven solely by the electric power generated by this generator. Further, there is also known a parallel hybrid vehicle in which at least one of both the engine and the motor is subjected to switching according to the running conditions or the amount of electric energy remaining in a battery (secondary battery) that is charged by the generator.

As described above, while a hybrid vehicle is superior to an engine-driven vehicle from the environmental point of view, there is currently no hybrid vehicle that is capable of outputting electric power to the external for uses other than running of the vehicle.

Presumably, as disclosed in JP-B-3486491 and JP-B-Hei 5-22612, this would be achieved by mounting a generator used as an external power source and dedicated to an electrical device as an external device. However, this arrangement requires an additional generator to be provided separately from the driving device used for running the vehicle. This causes an increase in the number of parts and thus drives up the cost, and further causes an increase in weight. Further, when implementing a two-wheeled vehicle, which is typically provided with a limited mounting space, as a hybrid vehicle and mounting a generator for external power supply to the vehicle, this results in a deterioration in running performance or maneuverability.

Further, in the configurations disclosed in JP-B-3486491, JP-B-Hei 5-22612 and JP-B-2558478, the electric power generated by the generator is supplied to the external device. Accordingly, while the device is being used, the engine for driving the generator is operated irrespective of the load of the external device to which electric power is supplied, so engine driving noise is generated.

EP 1 199 205 discloses a hybrid vehicle comprising an engine, a generator for generating electric power using power of the engine, a battery for storing the electric power generated by the generator, a motor for generating power using electric power from at least one of the generator and the battery to drive a drive wheel, a controller configured to adjust the electric power from at least one of the generator and the battery.

In this regard, in hybrid vehicles such as a series hybrid vehicle, in particular, depending on the case, such as when the vehicle starts to run from the stopped state, the vehicle is run solely by the drive motor without driving the engine, thus allowing quiet running. In view of this, in realizing a vehicle configured as described above, it is desired to provide a hybrid vehicle which allows, during the electric drive of the vehicle solely by the drive motor, electric power to be supplied to the external device without driving the engine and thus while keeping silence of the drive.

The present invention has been made in view of the above considerations, and accordingly it is an object of the present invention to provide a hybrid vehicle which makes it possible to output electric power to the external for uses other than for vehicle running and to use an external device such as lighting on an outing site such as a campsite by simply moving the vehicle to that site, and which can also be implemented as a two-wheeled vehicle.

This objective is solved in an inventive manner by a hybrid vehicle comprising an engine, a generator for generating electric power using power of the engine, a battery for storing the electric power generated by the generator, a motor for generating power using electric power from at least one of the generator and the battery to drive a drive wheel, an external output terminal to which an external device is connectable, and a controller configured to adjust the electric power from at least one of the generator and the battery and to output the electric power to the external output terminal as supply electric power for the external device.

With the present invention there is provided a hybrid vehicle that allows electric power to be supplied to an external device without driving the engine and thus while keeping silence.

The hybrid vehicle according to a preferred embodiment further comprises an external load detecting section for detecting an external load electric power due to the external device, and a stored capacity detecting section for detecting a stored capacity of the battery, wherein, when the stored capacity of the battery detected by the stored capacity detecting section is sufficient for the external load electric power detected by the external load detecting section, the controller is configured to output the electric power of the battery to the external output terminal as the supply electric power for the external device, and, when the stored capacity of the battery is not sufficient for the external load electric power, the controller is configured to drive the engine and to output electric power generated by the generator to the external output terminal as the supply electric power for the external device.

Further, preferably when the electric power generated by the generator, which is output to the external output terminal, exceeds the external load electric power, the controller is configured to supply surplus electric power to the battery.

The hybrid vehicle according to another preferred embodiment further comprises a mode setting section for selectively setting between a running mode for enabling electric power to be supplied to the external device during vehicle running, and a generator mode for causing electric power to be supplied to the external device from at least one of the generator and the battery during vehicle stoppage.

Yet further, preferably when the running mode is selected by the mode setting section, the controller is configured to supply low-voltage DC electric power to the external output terminal as the supply electric power for the external device, and when the generator mode is selected, the controller is configured to supply one of low-voltage DC electric power and high-voltage AC electric power corresponding to the detected external load electric power to the external output terminal as the supply electric power for the external device.

Still further, preferably the controller is configured to adjust the electric power from at least one of the generator and battery and to output it to the external output terminal as the electric power to be supplied to the external device.

In the following, the present invention is explained in greater detail with respect to several embodiments thereof in conjunction with the accompanying drawings, wherein:
- FIG. 1: is a side sectional view schematically showing the construction of the main part of a hybrid vehicle according to an embodiment,
- FIG. 2: is a plan sectional view showing a drive unit of the hybrid vehicle according to the embodiment,
- FIG. 3: is a block diagram showing the system configuration of the hybrid vehicle according to the embodiment,
- FIG. 4: is a diagram illustrating motor control modes provided to a motor controlling section,
- FIG. 5: is a flowchart illustrating the operation of a controller during running of the hybrid vehicle according to the embodiment,
- FIG. 6: is a flowchart illustrating the operation of the controller during running of the hybrid vehicle according to the embodiment,
- FIG. 7: is a flowchart illustrating the operation of the controller during running of the hybrid vehicle according to the embodiment,
- FIG. 8: is a flowchart illustrating the operation of the controller during running of the hybrid vehicle according to the embodiment, and
- FIG. 9: is a flowchart illustrating the operation of the controller when the hybrid vehicle according to the embodiment is at rest.

### Description of Reference Numerals and Symbols:

100: hybrid vehicle
102: rear wheel (wheel)
124: mode selector switch
150: exrternal device (external load device)
200: drive unit
210: generator
220: engine
240: drive motor (motor)
300: battery
310: battery control unit
312: battery state detecting section (stored capacity detecting section)
314: battery voltage detecting section
316: battery current detecting section
320: inverter
400: controller
410: external device load detecting section
420: main control section
420a: power generation/engine controlling section
420b: power balance computing/determining section
430: motor controlling section
440: motor current detecting section
500: socket (external load device connecting section)
510: insertion detecting switch
540: motor speed detecting section

Hereinafter, an embodiment will be described in detail with reference to the drawings.

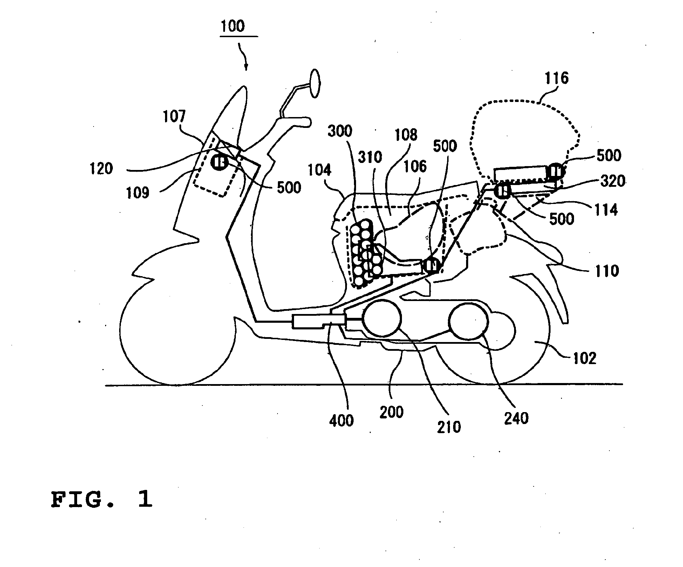

FIG. 1 is a side view schematically showing the construction of main sections of a hybrid vehicle according to an embodiment. It should be noted that the term "front", "rear", "left", and "right" as used in this embodiment refers to the front, rear, left, and right as seen from the driver seated on the seat of the vehicle.

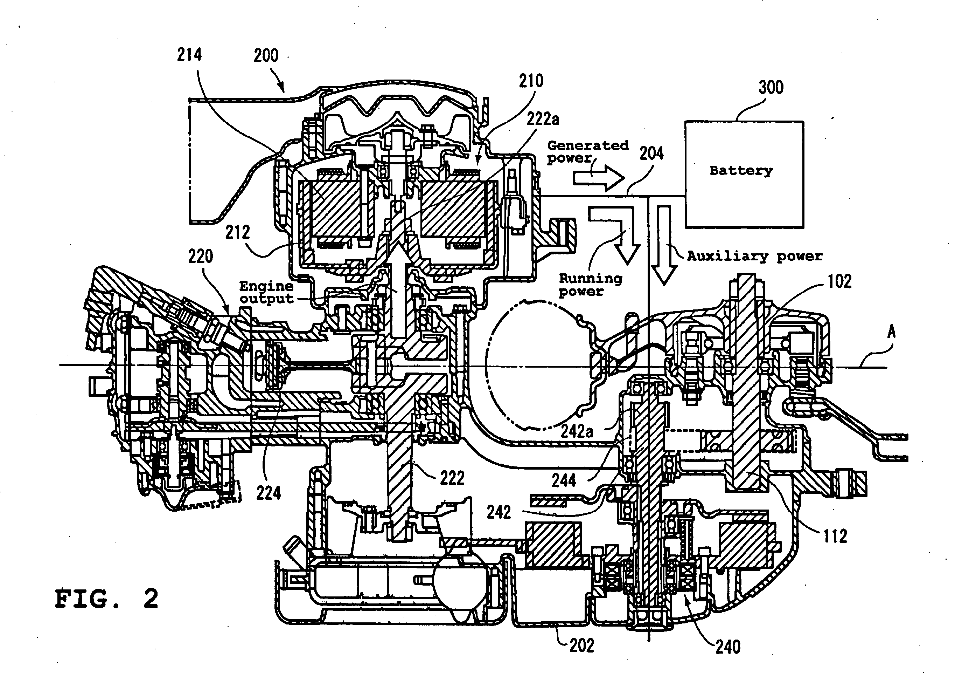

In this embodiment, a hybrid vehicle (hereinafter, referred to as the "vehicle") 100 shown in FIG. 1 is a series hybrid vehicle in which a generator 210 is driven by an engine 220 (see FIG. 2), and a wheel (in this example, a rear wheel) is driven by the electric power from the generator 210.

Further, the vehicle 100 used here is a scooter type two-wheeled vehicle which, despite the drawback of its relatively small luggage storage space in comparison to an automobile, is widely used in the market as a simple travel vehicle for its advantages such as the small parking space required.

The vehicle 100 according to this embodiment has a display section 120, a series hybrid type drive unit 200, a battery 300, a battery control unit (BMC) 310, an inverter 320, a controller 400, and an external load device connecting section (hereinafter, referred to as the "socket") 500. It should be noted that the vehicle 100 has a storage section 108 capable of storing a helmet 106 under a seat 104, with a fuel tank 110 being arranged in rear of the storage section 108.

First, the series hybrid type drive unit 200 equipped to the vehicle 100 will be described.

FIG. 2 is a plan sectional view showing the series hybrid type drive unit 200 according to the embodiment.

As shown in FIG. 2, the drive unit 200 rotatably supports the rear wheel 102 as a drive wheel in a cantilevered fashion. The drive unit 200 has the engine 220, the generator 210 driven by the engine 220, and a drive motor 240. The drive motor 240 is rotated by the electric power generated by the generator 210 and the electric power supplied from the battery 300 (see FIG. 1), and drives the rear wheel 102 as a drive wheel.

The engine 220 is arranged in front of the drive unit 200 with a crankshaft 222 being positioned in a direction orthogonal to the longitudinal direction of the vehicle. In the engine 220, a piston is arranged along a center axis (hereinafter, referred to as the "vehicle axis") A extending in the longitudinal direction of the vehicle having the drive unit 200.

The crankshaft 222 is connected to a rotor 212 of the generator 210 at its one end section, which in this example is an end section 222a located on the right side of the vehicle. Further, due to the torque of the crankshaft 222 rotated by the vertical motion of the piston 224, the rotor 212 rotates around the stator 214 of the generator 210, whereby the generator 210 itself generates electric power. In this way, the generator 210 is connected to the engine 220 by arranging the shaft of the rotor 212 coaxially with the crankshaft 222 of the engine 220 and then joining these shafts to each other.

The electric power generated by the generator 210 is supplied to the battery 300 and the drive motor 240 by the controller 400 (see FIG. 1), and also to the socket 500 (see FIG. 1) via the inverter 320 (see FIG. 1).

Provided in rear of the drive unit 200, more specifically to an arm section 202 arranged on the left side of the rear wheel 102, is the drive motor 240 that is connected to the generator 210 and the battery 300 via a wiring cable 204 (which is schematically shown in FIG. 2). It should be noted that in FIG. 2, the open arrows indicate the flow of engine output from the engine 220 to the generator 210, the flow of generated electric power from the generator 210 to the battery 300, the flow of driving power from the generator 210 to the drive motor 240, and the flow of auxiliary power from the battery 300 to the drive motor 240.

The drive motor 240 is arranged such that its rotation shaft 242 extends in a direction orthogonal to the longitudinal direction of the vehicle (for example, the vehicle axis A direction). The drive motor 240 is connected to a drive shaft 112, which is arranged in rear of and in parallel to the rotation shaft of the drive motor 240, at the distal end section of the rotation shaft 242, that is, at an end section 242a on the right side of the vehicle via a speed reduction section 244.

As described above, the drive unit 200 does not adopt a structure in which the engine 220 directly drives the drive wheel, which in this example is the rear wheel 102. That is, the engine 220 serves to drive the generator 210, and the rear wheel 102 is driven by the drive motor 240 by means of the electric power supplied from the battery 300 and the generator 210.

Accordingly, with the vehicle 100 configured as described above, the speed of the engine 220 can be made constant irrespective of the accelerator opening. That is, high combustion efficiency can be achieved for the engine 220 even during idling or rapid acceleration, thereby making it possible to reduce the amount of environmental pollutants generated due to fluctuations in the speed of the engine 220.

Further, as described above, in the drive unit 200, the engine 220 is arranged along the vehicle axis A of the vehicle 100 to which it is mounted, the generator 210 is arranged on the right-hand side of the vehicle 100 as a whole, and the drive motor 240 is arranged on the left-hand side of the vehicle 100 as a whole.

Therefore, when mounted to the main body of the vehicle 100, the drive unit 200 can be mounted in balance, and further the drive unit 200 itself provides good weight balance.

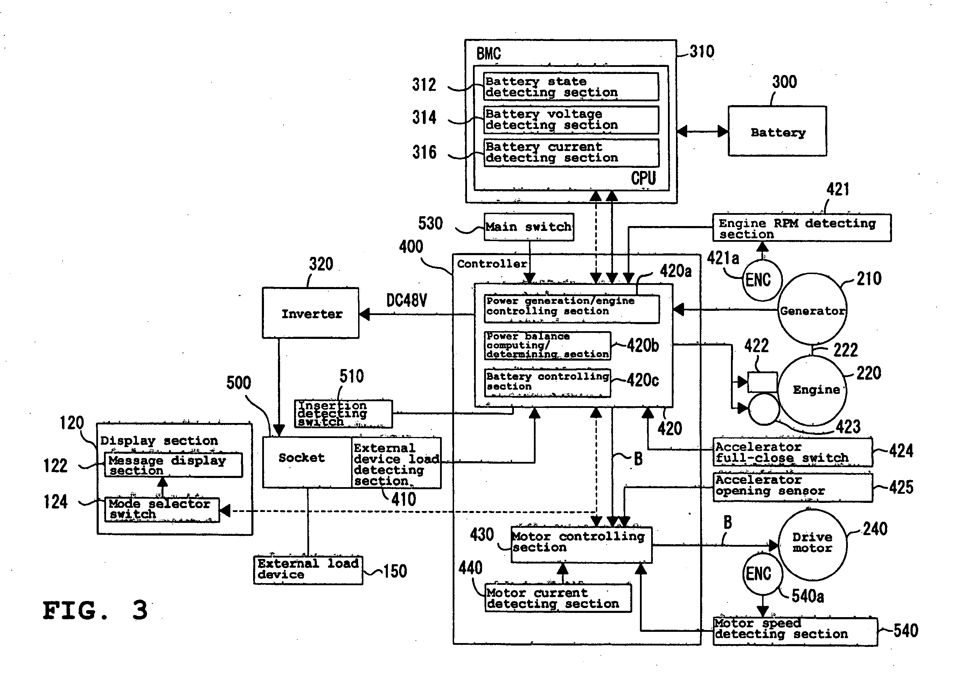

FIG. 3 is a block diagram showing the system configuration of the hybrid vehicle according to the embodiment.

The display section 120 shown in FIG. 3 is arranged in a front section (see FIG. 1) 107 near a handlebar stem (not shown), allowing the driver to view the condition of the vehicle.

The display section 120 has a liquid crystal panel or the like for meter display. The display section 120 includes a message display section 122 arranged on the display panel to display a message or the like, a mode selector switch 124 (indicated as "mode selector SW" in the drawing) for switching between a running mode and a generator mode, and the like.

The display section 120 serves as a meter required for a vehicle that is driven and controlled by the controller 400. For example, when serving as a meter concerning the running of the vehicle, the display section 120 displays the amount of remaining fuel, the amount of remaining battery charge, the vehicle speed, and the like.

The message display section 122 displays a message corresponding to the mode being selected by the mode selector switch 124.

The mode selector switch 124 allows the driver to select and switch between the "running mode" and the "generator mode". The mode selector switch 124 outputs information on the mode being selected by the driver to the message display section 122, and outputs it to the controller 400 as mode information.

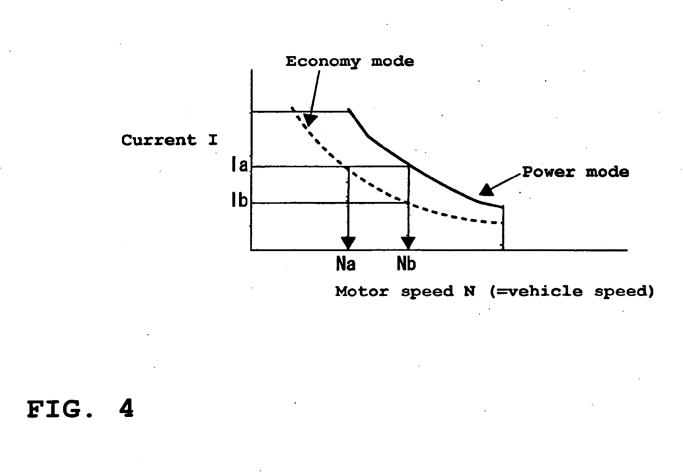

Further, although not shown, the display section 120 may be provided with a motor control mode selector switch for switching between a plurality of motor control modes (which in this example are a power mode and an economy mode, see FIG. 4) for controlling the drive motor 240. It should be noted that when this motor control mode selector switch is, for example, a selector switch for changing over to the economy mode, a configuration may be employed in which upon turning on a main switch 530, the power mode is selected as the default mode, and when changing the mode to the economy mode, the selector switch for changing over to the economy mode is turned on. In response to the operation on the selector switch, the controller 400 drives the drive motor 240 in correspondence with the mode being selected.

The battery 300 is arranged under the seat 104 and in front of the storage section 108 (see FIG. 1). The battery 300 is charged with the electric power supplied via the battery control unit 310 and also discharges electric power to supply the electric power to the drive motor 240 or to the external load device 150. Here, a lithium ion battery is used as the battery 300.

It should be noted that when a lithium ion battery is used as the battery 300, due to the characteristics of a lithium ion battery, leaving of the battery at full charge or full discharge of the battery results in a reduction in the life of the battery. For this reason, in this embodiment, the chargeable capacity of the battery 300 is set to be within a predetermined range. Specifically, in the case of the battery 300, for example, a value of charge that is 80% of the full charge is set as the battery charge upper limit value.

The battery control unit (denoted by "BMC" in FIG. 3) 310 serves to control the charge state of the battery 300. Here, the battery control unit 310 is arranged under the seat 104 and adjacent to the battery 300 and the storage section 108.

A CPU of the battery control unit 310 has a battery state detecting section 312 that detects the remaining battery capacity or the state of the battery, a battery voltage detecting section 314 that detects the voltage of the battery 300, and a battery current detecting section 316 that detects the battery current.

The battery control unit 310 outputs information on the remaining battery capacity, the battery voltage, and the battery current to the controller 400, and also controls the electric power supplied to the battery 300 via the controller 400.

The inverter 320 is connected to the socket 500, and converts DC electric power, which is supplied from the battery 300 or the generator 210 via the controller 400, into AC electric power and outputs it to the external via the socket 500. Accordingly, the generator 210 itself can be used as a commercial-frequency power source, thus allowing use of the external load device (hereinafter, referred to as the "external device)") 150 by supplying electric power to the external device 150 via the socket 500.

Further, the inverter 320 converts the DC electric power supplied from the battery 300 or the generator 210 via the controller 400 into low-voltage AC electric power and outputs it to the external via the socket 500.

The inverter 320 as described above converts, for example, a direct current of 48 V, which is supplied from the generator 210 or the battery 300 via the controller 400, into an alternating current of 100 V or a direct current of 12 V and outputs it to the external device 150 connected to the vehicle 100 via the socket 500.

Here, as shown in FIG. 1, the inverter 320 is mounted to the part of a rear carrier 114 provided to the tail section of the vehicle main body. Accordingly, when the inverter 320 is a 100 V power source, the inverter 320 is spaced apart from the drive unit 200 that generates heat and also receives running wind, whereby an improvement can be achieved in terms of cooling property.

The inverter 320 may be provided integrally with the lower surface of a rear trunk box 116 (see FIG. 1) installed on the rear carrier 114. In the case of this construction, the inverter 320 is arranged in the part of the rear carrier 114 upon mounting the rear trunk box 116 to the rear carrier 114.

The socket 500 is an external output terminal to which the external device 150 located outside of the vehicle, such as an electrical product, can be connected. As shown in FIG. 1, the socket 500 is provided at a predetermined position of the vehicle 100. In this example, the socket 500 is arranged at each of a plurality of locations, such as in a storage box 109 in the front section 107, below the storage section 108 under the seat 104, and near the rear carrier 114 arranged above the rear wheel 102.

One of the sockets 500 is arranged near the storage box 109, that is, inside the storage box 109 in this example. Accordingly, the external device 150 of a size that can be received in the storage box 109 can be connected to the socket 500 and received within the storage box 109. Examples of the external device 150 include audio/visual devices such as a television receiver, a radio, and a videocassette recorder, a personal computer and its peripheral devices, thermal devices using electrical resistance, such as an inverter-type air conditioner, lighting equipment, a toaster, a foot warmer, an electric blanket, and an incandescent lamp, and electrical devices such as a cleaner.

As shown in FIG. 3, each of the sockets 500 is provided with an insertion detecting switch 510 for detecting the insertion (connection) of the external device 150 in the socket 500. Information on whether or not connection of the external device 150 has been made is output to the controller 400 by the insertion detecting switch 510.

The load electric power of the external device 150 connected to the socket 500 is detected by an external device load detecting section 410 that detects the load electric power of the external device 150, and is output to the controller 400.

The controller 400 is connected to the display section 120, the generator 210, the drive motor 240, the battery control unit 310, the inverter 320, the external device load detecting section 410, and the insertion detecting switch 510. Further, the controller 400 is connected to the main switch 530, respective components 421 to 425 for controlling the engine 220, a motor speed detecting section 540, and the like. Examples of the respective components for controlling the engine 220 include an engine speed detecting section 421, a fuel injection device 422, a throttle motor 423, an accelerator full-close switch 424, and an accelerator opening sensor 425.

The engine speed detecting section 421 detects the rotational speed of the generator 210, that is, the speed of the engine 220 using an encoder 421 a, and outputs it to a main control section 420 of the controller 400.

The controller 400 performs a vehicle drive control using the engine 220, the motor, and the battery 300 on the basis of the mode information indicating either of the "running mode" and the "generator mode" input from the mode selector switch 124 of the display section 120.

The controller 400 adjusts the output of the engine 220 on the basis of the input information, and when in the "running mode", controls the engine 220 in accordance with the accelerator opening. That is, the controller 400 controls the engine 220, the motor 240, the battery 300, and the like on the basis of the accelerator opening information input from the accelerator opening sensor 425 and the accelerator fully-close information input from the accelerator full-close switch 424. It should be noted that an accelerator grip provided to the handlebar section, or the like is used as the accelerator opening sensor 425.

For example, when causing the vehicle 100 to drive gradually from the stopped state, the controller 400 stops the engine 220 and drives the wheels solely by the drive motor 240 using the electric power supplied from the battery 300. When a predetermined speed is reached, the controller 400 drives the engine 220 and causes the generator 210 to generate electric power, and supplies the generated electric power to the battery 300. Further, the controller 400 drives the engine 220 when the remaining capacity of the battery 300 is smaller than a predetermined value.

In the "generator mode", when the insertion detecting switch 510 is OFF, the controller 400 drives the engine 220 in accordance with the battery state to thereby control the engine output. That is, when the insertion detecting switch 510 is OFF, the controller 400 determines whether or not the charge capacity of the battery satisfies a predetermined charge capacity, that is, whether or not it has reached the upper limit value for the battery charge capacity. When the result of this determination indicates that the charge capacity of the battery does not satisfy a predetermined charge capacity, the controller 400 drives the engine 220 and causes the generator 210 to generate electric power to thereby charge the battery 300 until the predetermined charge capacity is reached. Further, when the battery 300 satisfies the predetermined charge capacity, the controller 400 stops the engine 220 via a power generation/engine controlling section 420a.

On the other hand, when, in the "generator mode", the insertion detecting switch 510 is ON, the controller 400 rotationally drives the engine 220 on the basis of a pre-stored map corresponding to the states of the external load electric power and battery charge capacity, thereby charging the battery 300 using the generated power. In a corresponding example using the map, when, for example, the external load electric power is 50 W, the engine speed is 2000 rpm, and when the external load electric power is 900 W, the engine speed is 7000 rpm. Further, when the charge capacity of the battery 300 is less than 30%, the controller 400 performs control so that the engine speed becomes one to which an equivalent of +500 rpm is added.

As described above, in the "generator mode", power control is performed irrespective of whether or not the external device 150 is connected. It should be noted that during the "generator mode", for example, under environments where silence is to be maintained, the engine 220 is controlled so as not to be driven through engine output control from the controller 400 based on an operation by the user.

Further, the controller 400 restricts the power conversion operation by the inverter 320 on the basis of the mode information input from the mode selector switch 124.

Specifically, the controller 400 includes the main control section 420 to which information from each of respective devices in the vehicle is input, a motor controlling section 430, and a motor current detecting section 440.

Specifically, the main control section 420 is input with external device load information from the external device load detecting section 410, battery information (battery state information, battery voltage information, and battery current information) from the battery control unit 310, and information on the amount of generated electric power from the generator 210, and the like.

Further, the main control section 420 includes the power generation/engine controlling section 420a for controlling the generator 210/engine 220 on the basis of the input information, a power balance computing/determining section (hereinafter, referred to as the "computing/determining section") 420b for computing and determining the power balance in the vehicle, and a battery controlling section 420c.

The controller 400 performs running of the vehicle based on the input information, or supply of electric power to the external device 150 in the state where the vehicle 100 is running or at rest, via the power generation/engine controlling section 420a, the computing/determining section 420b, the battery controlling section 420c, and the motor controlling section 430.

Upon connecting the external device 150 to the socket 500, information indicating the connection of the external device 150 to the socket 500 is input to the main control section 420. Further, information on the load electric power of the external device 150 connected to the socket 500 is input to the main control section 420 by the external device load detecting section 410.

The computing/determining section 420b computes the power balance based on the input load electric power information, the remaining charge of the battery 300, the information on the electric power generated by drive of the engine, and the electric power consumption of the drive motor 420b when the vehicle is running, which are input to the computing/determining section 420b. On the basis of the computation result, the computing/determining section 420b further makes a determination as to whether the supply of electric power to the external device 150 is performed by using solely the battery 300 or by using the battery 300 and the generator 210.

In accordance with this determination, the controller 400 controls the generator 210, the engine 220, the battery 300, and the drive motor 240 via the power generation/engine controlling section 420a, the battery controlling section 420c, and the motor controlling section 430.

The computing/determining section 420b adjusts the output of the engine 220 so that the charge capacity of the battery 300 becomes equal to or higher than a predetermined value (predetermined threshold). Further, using the battery 300, the generator 210, and the drive motor 240, the computing/determining section 420b adjusts the balance of electric powers input to and output from the vehicle 100 due to the running of the vehicle or the supply of electric power to the external device 150. As for the balance of electric powers input to and output from the vehicle, the output electric powers are the electric powers supplied to the external device 150, the battery 300, and the drive motor 240, and the input electric powers are the electric power generated by the generator 210 and the dischargeable capacity of the battery.

When the external device 150 is not input to the socket 500, as the output electric power, the computing/determining section 420b computes the external device load electric power as 0 and the electric power supplied to the external device 150 as 0.

Further, when the vehicle 100 is at rest, the computing/determining section 420b computes the electric power consumption of the drive motor 240 (motor electric power) as 0, and the electric power supplied to the drive motor 240 as 0.

Since the amount of electric power generated by the generator 210 is determined by the engine speed, the power generation/engine controlling section 420a adjusts the output of the engine 220 on the basis of the engine speed information input from the engine speed detecting section 421.

Further, the power generation/engine controlling section 420a determines the running/stopped state on the basis of the accelerator full-close information input from the accelerator full-close switch 424 and the engine speed information (here, the engine speed = 0) from the engine speed detecting section 421. On the basis of the result of this determination, the power generation/engine controlling section 420a controls the throttle motor 423 to fully close the throttle valve, and stops the supply of fuel from the fuel injection device 422 and the ignition of the engine 220.

Motor control information (motor drive command value) for the drive motor 240, which is based on the result of computation/determination by the computing/determining section 420b of the main control section 420, is output to the motor controlling section 430, whereby the drive motor 240 is controlled.

Further, the main control section 420 turns on the respective electric devices constituting the hybrid vehicle itself on the basis of information input from the main switch 530.

Further, when mode information indicative of the "running mode" is input, the main control section 420 controls the inverter 320 so as to be capable of performing DC-AC conversion and being used as a commercial low-power power source via the socket 500.

Note that instead of being controlled so as to be capable of DC-AC conversion, the inverter 320 may be controlled so as to be capable of DC-DC conversion (for example, from a DC of 48 V to a DC of 12 V).

Further, when mode information indicative of the "generator mode" is input to the controller 400, the main control section 420 controls the inverter 320 so as to be capable of DC-AC conversion or DC-DC conversion. Examples of the DC-AC conversion include converting a DC of 48V into an AC of 100V, and examples of the DC-DC conversion include converting a DC of 48V into a DC of 12 V.

As described above, in the "running mode", the main control section 420 performs control such that electric power is supplied only to the external device 150 with a low load via the inverter 320. In the "generator mode", the main control section 420 enables supply of high/low electric power in accordance with the external device 150. Thus, the supply of electric power to the drive motor 240 that is driven during the "running mode" is not impaired.

Further, in each of the modes, the main control section 420 performs power control with respect to the inverter 320, such as cutting off or restricting the supply of electric current to the inverter 320, on the basis of the information indicating the presence of external device connection (information indicating ON of the insertion switch) from the insertion detecting switch 510, and the electric current value of the external load.

The motor control information (command value) from the main control section 420, the mode information indicative of the "running mode" or the "generator mode" from the mode selector switch 124, and the like are input to the motor controlling section 430.

Also input to the motor controlling section 430 are throttle opening information from a throttle position sensor, the motor current from the motor current detecting section 440, and the motor speed detected by the motor speed detecting section 540 via an encoder 540a. On the basis of these input information, the motor controlling section 430 controls the drive of the drive motor 240.

While the motor controlling section 430 basically controls the drive of the drive motor 240 on the basis of the motor control information input from the main control section 420. In this connection, the motor controlling section 430 has a plurality of motor control modes and controls the drive motor 240 on the basis of the motor control modes.

FIG. 4 is a diagram illustrating the motor control modes provided to the motor controlling section 430.

FIG. 4 shows the relationship between the current value and the motor speed in each of the economy mode and power mode, with the electric current I and the motor speed N (= vehicle speed) being taken along the vertical axis and the horizontal axis, respectively.

The economy mode is a motor control mode in which the amount of electric current supplied to the drive motor 240 when controlling the drive motor 240 by the motor controlling section 430 is small (or the supplied voltage is low).

Further, the power mode is a motor control mode in which the amount of electric current supplied to the motor when controlling the drive motor 240 by the motor controlling section 430 is large (or the supplied voltage is high) as compared with that in the economy mode.

As shown in FIG. 4, when the motor controlling section 430 supplies a current Ia to the drive motor 240, the motor speed Nb in the power mode becomes larger than the motor speed Na in the economy mode. Further, when the motor speed Na is to be maintained in the economy mode, the current value at this time is lb, which is smaller than the current value Ia in the power mode.

As indicated by each motor control mode in FIG. 4, the motor controlling section 430 controls the drive of the drive motor 240 under the constraint of effective current value I/motor speed N.

Further, the motor controlling section 430 changes the motor control information (command value) from the main control section 420 by means of the motor control mode. In cases where, for example, the vehicle drives up a steep hill, when, in the economy mode, the same current is supplied to the drive motor 240, then the motor speed is to be lowered in order to maintain the torque. Further, when, in this condition, the current is lowered to maintain the same vehicle speed, since the torque and the current are in a substantially proportional relation, the required torque is not generated, making it difficult for the vehicle to drive up the hill. In this case, the motor controlling section 430 controls the drive of the drive motor 240 while changing over to the power mode, thus increasing the torque of the drive motor 240.

With regard to the power mode and the economy mode, when the motor control mode selector switch (not shown) for switching between these modes is provided to the display section 120, the information on the motor control mode is input to the motor controlling section 430. On the basis of the motor control mode information thus input, the motor controlling section 430 switches the control mode for the drive motor 240. While in this example the drive motor control mode is switched by the motor controlling section 430, this should not be construed restrictively. That is, a configuration is also possible in which the output information from the motor control mode selector switch is input to the main control section 420, and the main control section 420 generates motor control information corresponding to the motor control mode and outputs it to the motor controlling section 430. At this time, the motor controlling section 430 controls the drive motor 240 on the basis of the motor control information which is output from the main control section 420 and in which the motor control mode information is reflected.

Now, description will be given of the operation performed by the controller 400 of the hybrid vehicle according to this embodiment.

First, when the main switch 530 is turned on, the main-switch-ON information is input to the controller 400, whereby the controller 400 turns on the power of each device of the vehicle. Here, the controller 400 causes a meter display to be made on the display section 120 and enables the mode selector switch 124. Then, mode information indicative of the mode being selected is input from the mode selector switch 124 thus enabled to the controller 400, and the controller 400 performs a drive control corresponding to the input mode information.

Here, when the driver selects one of the "running mode" or the "generator mode" with the mode selector switch 124, the information on the mode being selected is input to the controller 400. The controller 400 thus performs a drive control corresponding to the selected mode.

When the controller 400 performs regeneration of the drive motor 240, in the controller 400, the current flow B shown in FIG. 3, in which the current flows from the main control section 420 to the drive motor 430 via the motor controlling section 430, is reversed. That is, the drive motor 240 functions as the generator, and the generated electric power flows to the main control section 420 via the motor controlling section 430. The main control section 420, to which electric power is supplied from the drive motor 240, charges the battery 300, drives the engine 220, or supplies electric power to the external device 150 on the basis of the remaining capacity of the battery 300, the amount of electric power to be supplied to the external device 150, or the like.

For example, when the drive motor 240 is to be regenerated, at the time of computing the power balance, the computing/determining section 420b of the main control section 420 sets the supplied electric power to the drive motor 240, which is computed as the output power, to 0, and adds the electric power supplied from the drive motor 240 as the input power. The power balance computation/determination is performed so that a good balance is maintained between the output power and the input power thus calculated. On the basis of such an operation, the power generation/engine controlling section 420a, the battery controlling section 420c, the motor controlling section 430, and the like control the generator 210, the engine 220, the battery 300, the drive motor 240, and the like.

### (Running Mode)

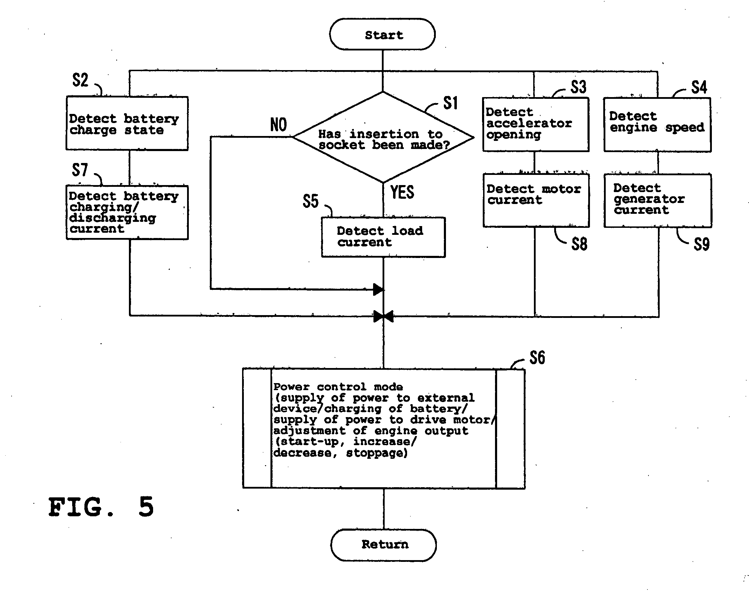

FIG. 5 is a flowchart illustrating the operation of the controller 400 during the "running mode" in the hybrid vehicle according to the embodiment.

When the "running mode" is selected, the controller 400 determines, by means of the insertion detecting switch 510, whether or not the external device 150 has been inserted and connected into the socket 500 (step S1), and also detects the battery charge state (step S2). Further, in addition to performing the processing in each of the steps S1 and S2, the controller 400 detects the accelerator opening (step S3), and further detects the engine speed (step S4).

When it is determined in step S1 that the external device 150 has been inserted into the socket 500, the process shifts to step S5, and when it is determined that the external device 150 has not been inserted into the socket 500, the process shifts to step S6.

In step S5, information on the load electric power of the external device 150 inserted into the socket 500 is input to the controller 400, specifically to the main control section 420 by the external device load detecting section 410.

On the other hand, in step S2, the charge state of the battery 300 is detected via the battery control unit 310, and the process shifts to step S7. In step S7, the current input to or output from the battery 300, that is, the charging/discharging current of the battery 300 is detected via the battery control unit 310. Then, the process shifts to step S6.

Further, in step S3, the accelerator opening is detected, and the process shifts to step S8 where the current input to or output from the drive motor 240 is detected. The process then shifts to step S6.

In step S4, using the encoder 421 a, the rotational speed of the generator 210, that is, the engine speed is detected by the engine speed detecting section 421, and then the process shifts to step S9.

In step S109, the controller 400 detects, as information on the amount of power generated by the generator 210 (generator generated power), the current input to or output from the generator 210 via the power generation/engine controlling section 420a. The process then shifts to step S6.

In step S6, the controller 400 performs power control mode processing for controlling the electric power used by the vehicle on the basis of the detected information, that is, the external device load information, the battery information (such as the battery charge state information and the battery current information), the motor current information corresponding to the accelerator opening, and the generated-power information.

Specifically, the following operations are performed in the power control mode: supply of electric power to the external device 150; charging of the battery 300; discharging of the battery 300; supply of electric power to the drive motor 240; and adjustment on the output of the engine 220 (engine start, increase/decrease of the engine output, engine stoppage, or the like). After the processing of step S6, to repeat the running mode processing, the process returns to step S1 and the processing from step S1 is repeated.

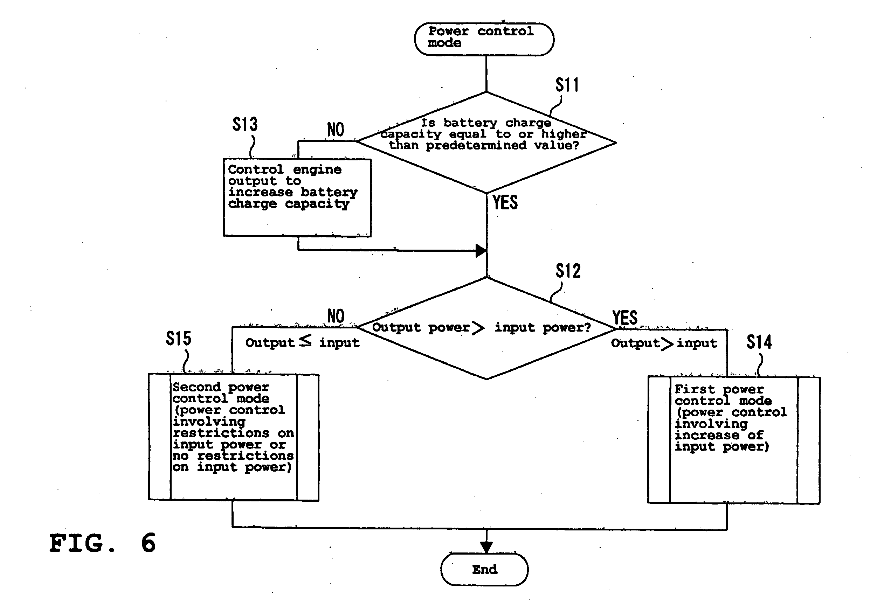

FIG. 6 is a flowchart illustrating the operation of the controller 400 during running of the hybrid vehicle according to the embodiment of the present invention. That is, FIG. 6 illustrates the processing of the "power control mode" shown in step S6 of FIG. 5.

That is, after the external device load information, the battery information (such as the battery charge state information and the battery current information), the motor current information corresponding to the accelerator opening, and the generated-power information are detected, the processing of step S11 is performed.

In step S11, the computing/determining section 420b in the main control section 420 of the controller 400 determines whether or not the charge capacity of the battery is equal to or higher than a predetermined value set in advance. If the charge capacity of the battery is determined to be equal to or higher than the predetermined value, the process shifts to step S12, and if it is determined to be lower than the predetermined value, the process shifts to step S13.

Here, the predetermined value refers to the minimum battery charge capacity (remaining battery charge capacity) required for performing the supply of electric power to the external device 150. The predetermined value is determined on the basis of the engine starting power generated by the generator 210 and the amount of running power required until reaching a predetermined vehicle speed (for example, 30 km/h) when running solely on electric power.

The predetermined value is determined as an individual value by the specifications of the engine 220 and generator 210 mounted to the vehicle, the vehicle weight, or the like. In this embodiment, the predetermined value is set as 30% battery charge capacity (charged state) with respect to the full charge of the battery 300.

On the basis of the predetermined value, when it is determined that the charge capacity of the battery 300 does not satisfy the predetermined charge capacity, the controller 400 drives the engine 220, causes the generator 210 to generate electric power, and charges the battery using the generated electric power until the predetermined charge capacity is reached. The predetermined value representing the minimum battery charge capacity required for the drive of the vehicle 100 corresponds to the battery charge lower limit value as opposed to the battery charge upper limit value mentioned above.

In step S13, the engine output is adjusted to increase the charge capacity of the battery. The process then shifts to step S12.

In step S12, the computing/determining section 420b of the main control section 420 determines whether or not the output power is larger than the input power. Specifically, in step S12, the computing/determining section 420b computes as the output power the sum of the supplied electric power to the external device 150, the supplied electric power to the battery 300, and the supplied electric power to the drive motor 240. Further, the computing/determining section 420b computes as the input power the sum of the electric power generated by the generator 210 and the battery charge capacity equal to or higher than a predetermined capacity (for example, 30% of the full charge capacity) that can be discharged.

Then, it is determined whether or not the computed output power is larger than the computer input power. When it is determined that the output power is larger than the input power, the process shifts to step S14, and when it is determined that the output power is not larger than the input power, the process shifts to step S15.

In step S14, since the output power exceeds the input power, the controller 400 performs first power control mode processing that involves an increase of the input power, and the processing ends.

In step S15, since the output power is below the input power, the controller 400 performs second power control mode processing that involves placing restrictions on input power or eliminating restrictions on input power, and the processing ends.

In the first power control mode in step S14, when it is determined by the computing/determining section 420b that the output power exceeds the input power, the controller 400 performs power control so as to increase the input power to a value commensurate with the output power. Specifically, in the first power control mode, a suitable power balance for the vehicle is achieved by sequentially applying restrictions to the devices after engine power-up. Here, the first power control mode will be described below.

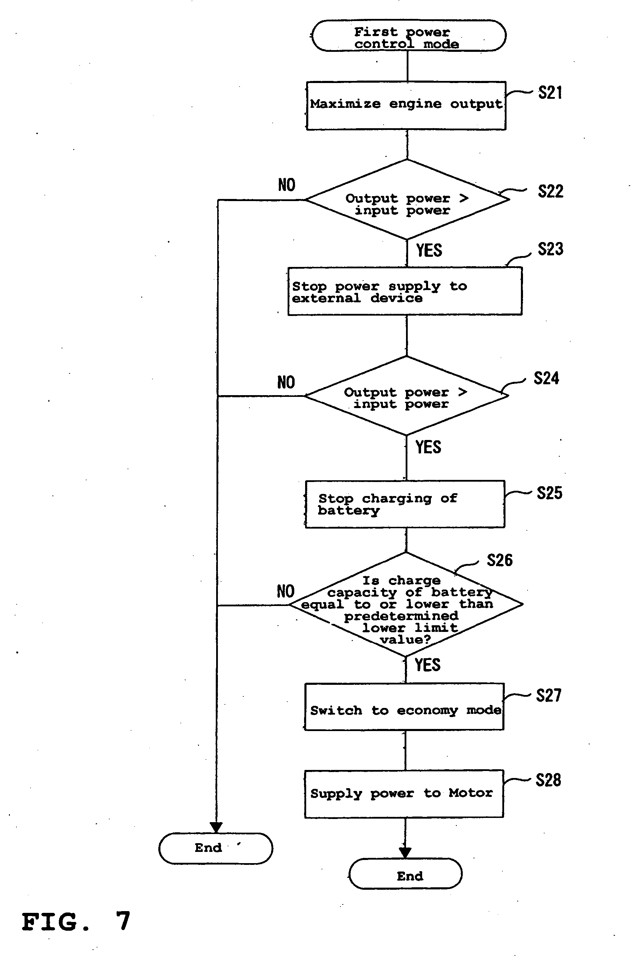

FIG. 7 is a flowchart illustrating the operation of the controller 400 during the running of the hybrid vehicle according to the embodiment. Specifically, FIG. 7 is a flowchart illustrating the first control mode.

As shown in FIG. 7, in step S21, the controller 400 makes the output of the engine 220 maximum via the power generation/engine controlling section 420a, and then the process shifts to step S22.

In step S22, it is determined by the computing/determining section 420b whether or not the output power (the sum of the supplied electric power to the external device 150, the supplied electric power to the battery 300, and the supplied electric power to the drive motor 240) is larger than the input power (the sum of the electric power generated by the generator 210 and the battery charge capacity equal to or higher than a predetermined capacity that can be discharged). If it is determined as the result of the determination that the output power is larger than the input power, the process shifts to step S23, and if it is determined that the output power is not larger than the input power, the process shifts to step S1 (see FIG. 5). It should be noted that when the process shifts to the processing of step S1, the second power control mode processing is performed because the output power is larger than the input power.

In step S23, the main control section 420 cuts off the supply of current to the inverter 320, thereby stopping the supply of electric power to the external device 150 via the socket 500. The process then shifts to step S24.

In step S24, it is determined by the computing/determining section 420b whether or not the output power (the sum of the supplied electric power to the external device 150, the supplied electric power to the battery 300, and the supplied electric power to the drive motor 240) is larger than the input power (the sum of the electric power generated by the generator 210 and the battery charge capacity equal to or higher than a predetermined capacity that can be discharged).

If it is determined as the result of the determination that the output power is larger than the input power, the process shifts to step S25, and if it is determined that the output power is not larger than the input power, the processing is ended, and the process shifts to step S1 (see FIG. 5). It should be noted that when the process shifts to the processing of step S1, the second power control mode processing is performed because the output power is larger than the input power.

In step S25, the controller 400 causes the battery control section 420c to stop the supply of electric power to the battery 300 via the battery control unit 310. The process then shifts to step S26.

In step S26, the computing/determining section 420b in the main control section 420 of the controller 400 determines whether or not the charge capacity of the battery is equal to or lower than a predetermined value set in advance. If the charge capacity of the battery is determined to be equal to or lower than the predetermined value, the process shifts to step S27, and if it is determined to be higher than the predetermined value, the processing is ended and the process shifts to step S1 (see FIG. 5).

In step S27, the controller 400 switches the motor control mode to the economy mode, and the process shifts to step S28. Specifically, the motor control mode is switched from the power mode to the economy mode by the motor controlling section 430. It should be noted that when the economy mode is set in advance through the motor control mode selector switch or the like, the process shifts to step S28 while maintaining the economy mode as it is.

In step S28, the controller 400 adjusts the supply of electric power to the drive motor 240 via the motor controlling section 430, and the first control mode is ended.

The adjustment of the electric power supply to the drive motor 240 by the motor controlling section 430 in step S28 is basically performed in the following manner. That is, the motor controlling section 430 receives the motor control information (command value) based on the charge capacity of the battery and supplied from the main control section 420, and controls the drive motor on the basis of this information.

However, in the first power control mode, a control is performed so as to reduce the output power of the vehicle as a whole. Accordingly, in step S27, the control mode is set to the economy mode in which the amount of current flowing to the drive motor 240 during the drive control of the drive motor 240 is small. Then, in step S28, on the basis of the economy mode thus set, the motor controlling section 430 alters the motor drive information (command value) from the main control section 420 and controls the drive of the drive motor 240. Accordingly, the amount of current flowing to the drive motor 240 can be made as small as possible.

Next, the second power control mode will be described.

In the second power control mode in step S15 shown in FIG. 6, when it is determined by the computing/determining section 420b that the output power is below the input power (not larger than the input power), the controller 400 performs control so as to reduce the input power to a value commensurate with the output power. Specifically, in the first power control mode, a suitable power balance for the vehicle is achieved by sequentially releasing the engine output to devices to which the engine output can be output through the adjustment of the engine output.

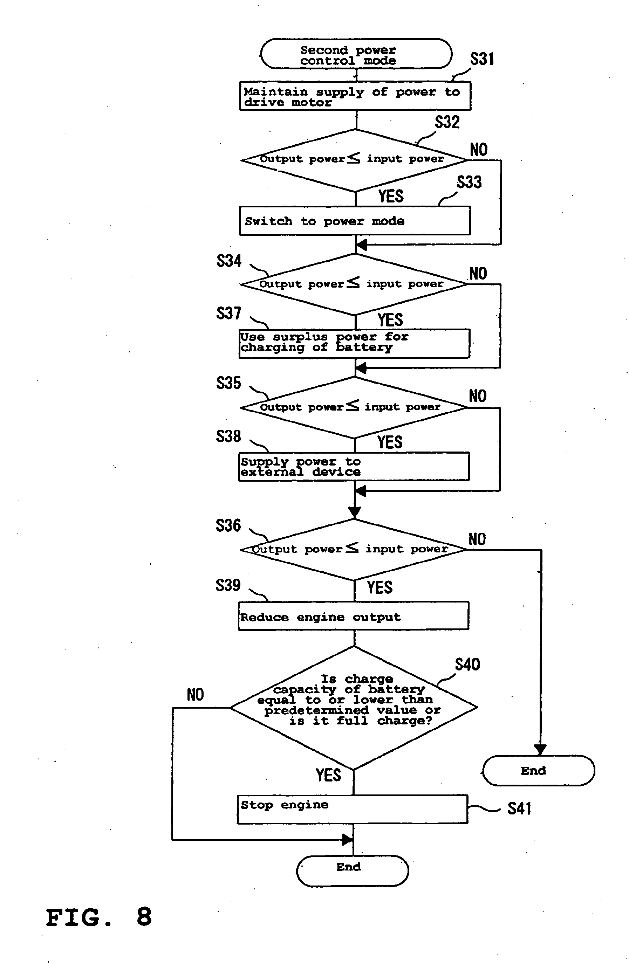

FIG. 8 is a flowchart illustrating the operation of the controller 400 during the running of the hybrid vehicle according to the embodiment. Specifically, FIG. 8 is a flowchart illustrating the second control mode.

As shown in FIG. 8, in step S31, the motor controlling section 430 maintains the supply of electric power to the drive motor 240 in accordance with the accelerator opening, and the process shifts to step S32.

In step S32, the drive motor control mode is the economy mode, and it is determined by the computing/determining section 420b whether or not the output power (the sum of the supplied electric power to the external device 150, the supplied electric power to the battery 300, and the supplied electric power to the drive motor 240) is equal to or less than the input power (the sum of the electric power generated by the generator 210 and the battery charge capacity equal to or higher than a predetermined capacity that can be discharged).

If it is determined as the result of the determination in step S32 that the output power is not larger than the input power, the process shifts to step S33, and if it is determined that the output power is larger than the input power, the processing is ended after steps S34 to S36. Specifically, while the vehicle is running, the process shifts to step S1 (see FIG. 5) after step S36 in order to repeat the running mode processing. It should be noted that when the process shifts to the processing of step S1, the first power control mode processing is performed because the output power is smaller than the input power.

In step S33, the motor controlling section 430 having received the motor control information from the main control section 420 switches the motor control mode to the power mode.

In the second power control mode, since the output power is below the input power (output power < input power), a control involving input power restriction or no input power restriction (output power = input power) is performed.

Thus, in step S33, when the motor control mode being selected is the economy mode, in order to make the output power larger or the input power smaller, the motor controlling section 430 sets the motor control mode to the power mode and drives the drive motor 240 on the basis of the power mode.

Accordingly, the amount of current supplied to the drive motor 240 can be made as large as possible, thus allowing an increase in output power. When the engine 220 is being driven at this time, the current supplied from the generator 210 to the battery 300 decreases, thereby making it possible to reduce the input power. It should be noted that when the motor controlling section 430 switches the motor control mode in step S33, the motor control information from the main control section 420 is altered.

After step S33, the process shifts to step S34.

In step S34, it is determined by the computing/determining section 420b whether or not the output power (the sum of the supplied electric power to the external device 150, the supplied electric power to the battery 300, and the supplied electric power to the drive motor 240) is equal to or less than the input power (the sum of the electric power generated by the generator 210 and the battery charge capacity equal to or higher than a predetermined capacity that can be discharged).

If it is determined as the result of the determination in step S34 that the output power is not larger than the input power, the process shifts to step S37, and if it is determined that the output power is larger than the input power, the processing is ended after steps S35 and S36. Specifically, while the vehicle is running, the process shifts to step S1 (see FIG. 5) after step S36 in order to repeat the running mode processing. It should be noted that when the process shifts to the processing of step S1, the first power control mode processing is performed because the output power is smaller than the input power.

In step S37, the computing/determining section 420b performs the computation of the input/output power balance, and if the electric power generated by the drive of the engine exceeds the amount of electric power supplied to the drive motor 240, the surplus electric power is supplied to the battery 300, thereby charging the battery 300. The process then shifts to step S35.

In step S35, it is determined by the computing/determining section 420b whether or not the output power (the sum of the supplied electric power to the external device 150, the supplied electric power to the battery 300, and the supplied electric power to the drive motor 240) is equal to or less than the input power (the sum of the electric power generated by the generator 210 and the battery charge capacity equal to or higher than a predetermined capacity that can be discharged).

If it is determined as the result of the determination in step S35 that the output power is not larger than the input power, the process shifts to step S38, and if it is determined that the output power is larger than the input power, the processing is ended after step S36. Specifically, while the vehicle is running, the process shifts to step S1 (see FIG. 5) after step S36 in order to repeat the running mode processing. It should be noted that when the process shifts to the processing of step S1, the first power control mode processing is performed because the output power is smaller than the input power.

In step S38, electric power is supplied via the inverted 320 to the external device 150 that is connected to the vehicle via the socket 500, and the process shifts to step S36. It should be noted that in step S38, electric power can be supplied to the external device from any one of the sockets 500 provided in the vehicle 100.

In step S36, it is determined by the computing/determining section 420b whether or not the output power (the sum of the supplied electric power to the external device 150, the supplied electric power to the battery 300, and the supplied electric power to the drive motor 240) is equal to or less than the input power (the sum of the electric power generated by the generator 210 and the battery charge capacity equal to or higher than a predetermined capacity that can be discharged).

If it is determined as the result of the determination in step S36 that the output power is not larger than the input power, the process shifts to step S39, and if it is determined that the output power is larger than the input power, the processing is ended. Specifically, while the vehicle is running, the process shifts to step S1 (see FIG. 5) after step S36 in order to repeat the running mode processing. It should be noted that when the process shifts to the processing of step S 1, the first power control mode processing is performed because the output power is smaller than the input power.

In step S39, the power generation/engine controlling section 420a reduces the output of the engine 220 to suppress the consumption of fuel, and then the process shifts to step S40.

In step S40, the controller 400 determines whether the charge capacity of the battery is equal to or higher than a predetermined value or at full charge capacity (more specifically, whether the charge upper limit value is reached). If this condition is met, the process shifts to step S41 where the engine is stopped and the processing is ended. Further, in step S40, if it is determined that the battery charge capacity is less than the predetermined value or that the charge upper limit value is not reached, the processing is ended. It should be noted that after ending the second power control mode, in order to repeat the running mode processing while the vehicle is running, the process shifts to step S1 (see FIG. 5) after step S40 or S41.

As described above, in the second power control mode performed when the output power < input power, the input electric power is decreased via the steps of supplying electric power to the drive motor 240, generating electric power by the generator 210, supplying electric power to the external device 150, and decreasing the engine output.

### (Generator Mode)

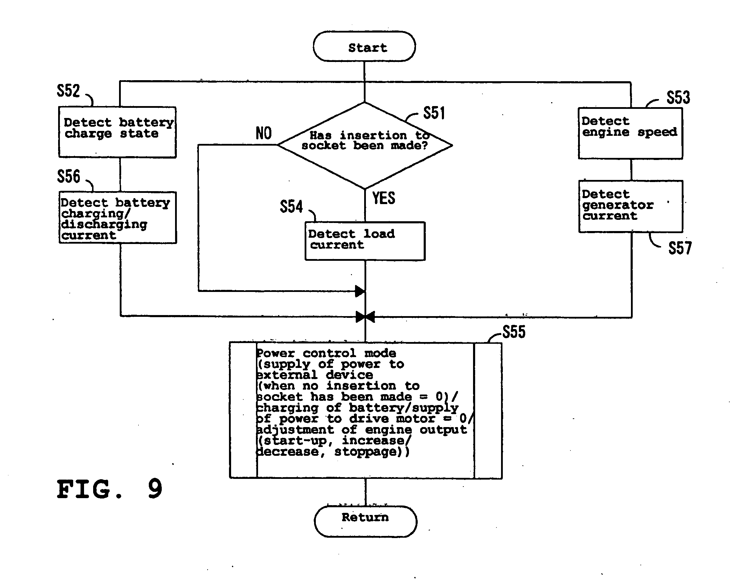

FIG. 9 is a flowchart illustrating the operation of the controller 400 while the hybrid vehicle according to the embodiment is at rest, that is, a flowchart illustrating the "generator mode".

When the "generator mode" is selected, the controller 400 determines, by means of the insertion detecting switch 510, whether or not the external device 150 has been inserted and connected into the socket 500 (step S51), and also detects the battery charge state (step S52). Further, the controller 400 detects the engine speed (step S53).

When it is determined in step S51 that the external device 150 has been inserted into the socket 500, the process shifts to step S54, and when it is determined that the external device 150 has not been inserted into the socket 500, the process shifts to step S55.

In step S54, information on the load electric power of the external device 150 inserted into the socket 500 is input to the controller 400, specifically to the main control section 420 by the external device load detecting section 410.

On the other hand, in step S52, the charge state of the battery 300 is detected via the battery control unit 310, and the process shifts to step S56. In step S56, the current input to or output from the battery 300, that is, the charging/discharging current of the battery 300 is detected via the battery control unit 310. Then, the process shifts to step S55.

In step S53, using an encoder, the generator speed, that is, the engine speed is detected by the engine speed detecting section 421, and then the process shifts to step S57.

In step S57, the controller 400 detects, as information on the amount of power generated by the generator 210 (generator generated power), the current input to or output from the generator 210 via the power generation/engine controlling section 420a. The process then shifts to step S55.

In step S55, in the same manner as the power control mode processing (see step S6 of FIG. 5) in the "running mode", the controller 400 performs processing based on the detected external device load information, battery information, and generated-power information.

Specifically, the power control mode in step S55 is processing in which the electric power supply to the drive motor 240 is set to 0 in the operation of the power control mode in the "running mode" (see step S6 of FIG. 5). In step S55, when no external device has been inserted into the socket 500, that is, when the insertion detecting switch 510 is OFF, the engine is driven in accordance with the battery state.

That is, as in the processing of step S6 in FIG. 5, when the insertion detecting switch 510 is OFF, it is determined by the computing/determining section 420b in the main control section 420 of the controller 400 whether or not the charge capacity of the battery is equal to or higher than a predetermined value set in advance.

On the basis of the predetermined value, when it is determined that the charge capacity of the battery 300 does not satisfy the predetermined charge capacity, the controller 400 drives the engine 220, causes the generator 210 to generate electric power, and charges the battery 300 using the generated electric power until the predetermined charge capacity is reached. Further, if the charge capacity of the battery 300 satisfies the predetermined charge capacity, the engine 220 is stopped via the power generation/engine controlling section 420a.

It should be noted that the predetermined value used here is the same as that described in step S11, and is determined as an individual value by the specifications of the engine 220 and generator 210 mounted to the vehicle, the vehicle weight, or the like. That is, the predetermined value refers to the minimum battery charge capacity (remaining battery charge capacity) required for performing the supply of electric power to the external device 150, and is determined on the basis of the engine starting power generated by the generator 210 and the amount of running power required until reaching a predetermined vehicle speed (for example, 30 km/h) when running solely on electric power.

Further, when the insertion detecting switch 510 is ON, the power control mode processing as shown in each of FIGS.7 and 8 is performed with the electric power supply to the drive motor 240 being set as 0.

That is, when the external device 150 has been connected into the socket 500, in the main control section 420, the computing/determining section 420b computes the speed of the engine 220, that is, the speed of the generator 210 on the basis of a map corresponding to the states of the load of the external device 150 and the battery charge capacity. Then, on the basis of the computation result, the computing/determining section 420b controls the drive of each of the generator 210 and engine 220.

In the vehicle 100 configured as described above, the computing/determining section 420b performs the computation/determination of the power balance also during the period until a predetermined vehicle speed is reached after the vehicle gradually starts to run from the stopped state, and the power generation/engine controlling section 420a, the battery controlling section 420c, the motor controlling section 430, and the like control the drive unit 200 in accordance with the determination.

Accordingly, until a predetermined vehicle speed is reached after a standing start, the drive motor 240 is driven solely by the electric power from the battery 300 to propel the vehicle. At this time, when the external device 150 is being connected in the socket 500, the controller 400 supplies the output power to the external device 150 while running the vehicle 100 solely on the electric power supplied from the battery 300.

As described above, during the running of the vehicle 100 as well, the external device 150 can be used by adjusting the input power and the output power to and from the vehicle 100 using the generator 210, the engine 220, the drive motor 240, and the battery 300. Further, on the basis of predetermined conditions, the external device 150 can be used without driving the engine 220.

Specifically, in the hybrid vehicle 100 according to this embodiment, unlike in the related art, the engine 220 is driven in accordance with the load of the external device to which electric power is supplied. Accordingly, the engine is not always driven in the state where the device is being used. Therefore, in the series hybrid vehicle 100 configured as described in this embodiment, the supply of electric power to the external device can be performed without driving the engine while the vehicle is running solely on the drive motor, which is a good advantage of a series hybrid vehicle.

Further, even when the vehicle is at rest, in the case where the external device connected to the vehicle 100 via the socket 500 is one with a low load, the electric power can be supplied to the external device 150 without driving the engine 220. Thus, the external device 150 such as lighting can be used in a state where there is no engine driving sound and hence silence is maintained.

With the vehicle 100 configured as described above, by using the generator 210 of the drive unit 200 used for running the vehicle, an electrical product (external device 150) such as lighting can be used via the socket 500 on an outing site such as a campsite. Accordingly, electric power can be supplied to the external device 150 that can be used by a commercial-frequency power source by means of a simple configuration.

Further, in the vehicle, the engine 220 does not become idle, and the engine 220 is started in accordance with the load of the external device 150 to which electric power is supplied. The engine 220 thus started is controlled so that its speed becomes one corresponding to the load of the external device 150. Therefore, the vehicle provides good fuel economy.

In the vehicle 100, during the "running mode", a communication terminal such as a portable telephone or a PDF, a personal computer, or the like can be connected via the socket 500 for charging. Further, in the "generator mode", there is no need to supply running power to the drive motor 240; accordingly, by using the battery 300 and the generator 210, a high-load electrical device that can be used with a commercial-frequency power source can be connected for use. Examples of a high-load electrical product (external device) include a projector, an electric power tool, a heater, and a refrigerator.

Further, according to the vehicle 100 of this embodiment, since the supply of electric power to the external device is performed using the generator used for running the vehicle, there is no need to mount a generator dedicated to external power supply separately from the generator used for running the vehicle, thereby making it possible to prevent increases in the number of parts, cost, and weight. In particular, since increases in the number of parts and weight can be suppressed, in the case of, for example, a two-wheeled vehicle with a limiting mounting space for devices such as the drive unit, a hybrid vehicle equipped with a generator for external power supply can be realized without a deterioration in running performance or maneuverability.

Further, according to the vehicle 100 of this embodiment, irrespective of whether the vehicle is running or at rest, the controller 400 performs the supply of electric power to the external device 150 in accordance with the external device load due to the external device 150, on the basis of the remaining charge capacity of the battery 300 and the amount of power generated by the generator. That is, when the charge capacity remaining in the battery 300 is not enough to cover the electric power consumption (external device load) by the external device 150, the engine 220 is driven and the electric power generated by the generator 210 is supplied to the external device 150.

Further, in cases such as when the generated power exceeds the amount of power supplied to the external device 150, the surplus power is used to charge the battery.

While in this embodiment a hybrid two-wheeled vehicle is described as an example of a hybrid vehicle capable of supplying electric power to an external device, this should not be construed restrictively. The present teaching is also applicable to a hybrid three-wheeled vehicle or hybrid automobile. Further, while in this embodiment the vehicle 100 used is a series hybrid vehicle, this should not be construed restrictively. A series/parallel hybrid vehicle may also be used.

A hybrid vehicle according to a first aspect includes: an engine; a generator for generating electric power using power of the engine; a battery for storing the electric power generated by the generator; a motor for generating power using electric power from at least one of the generator and the battery; a drive wheel rotationally driven by the power of the motor; an external load device connecting section to which an external load device is connected; and a controller for adjusting the electric power from at least one of the generator and the battery and outputting the electric power to the external load device connecting section as supply electric power for the external load device.

According to the above-described configuration, in the hybrid vehicle in which the motor generates power by means of the electric power from at least one of the generator, which generates electric power due to the drive of the engine, and the battery for storing the electric power generated by the generator, and the drive wheels are rotationally driven by the power of the motor to thereby cause the hybrid vehicle to run, the electric power from at least one of the generator and the battery, which causes the motor that rotationally drives the drive wheels to generate power, is adjusted and supplied via the external load device connecting section to the external load device connected to the external load device connecting section.

That is, the electric power from at least one of the generator and battery is adjusted and supplied to the external load device connected to the external load device connecting section, thereby making it possible to use the external load device.

As described above, the present teaching enables an external load device to be used in a hybrid vehicle, which is superior to an engine-driven vehicle that runs by being directly driven from the engine from the environmental point of view. Accordingly, an external device such as lighting can be used on an outing site such as a campsite by simply moving the vehicle to that site.

Further, according to the above-described structure, there is no need to mount a generator dedicated to the external load device in addition to the generator used for the running of the vehicle, whereby, unlike in the related art, a two-wheeled vehicle with limited mounting space can be implemented as a hybrid vehicle without causing a deterioration in running performance or maneuverability.

Further, in a hybrid vehicle according to a second aspect, in the above-described configuration, the hybrid vehicle further includes an external load detecting section for detecting an external load electric power due to the external load device, and a stored capacity detecting section for detecting a stored capacity of the battery, and when the stored capacity of the battery detected by the stored capacity detecting section is sufficient for the external load electric power detected by the external load detecting section, the controller outputs the electric power of the battery to the external load connecting section as the supply electric power for the external load device, and when the stored capacity of the battery is not sufficient for the external load electric power, the controller drives the engine and outputs electric power generated by the generator to the external load connecting section as the supply electric power for the external load device.

According to the above-described configuration, when the stored capacity of the battery is sufficient for the external load electric power due to the external load device, the electrical load device connected to the external load device connecting section can be used solely on the basis of the electric power from the battery; when the stored capacity of the battery is not sufficient for the external load electric power due to the external load device, the engine is driven and electric power generated by the generator is output to the external load device as the supply electric power, thereby compensating for the deficiency of electric power when using the external load device.

Accordingly, by adjusting the electric power from at least one of the generator and battery, in the vehicle running state where electric power supply to the motor is maintained or in the vehicle stopped state with no supply of electric power to the motor, when the stored capacity of the battery is sufficient for the external load electric power due to the external load device, the electric power generated by the generator is not output as the supply electric power for the external load device. Therefore, in the case where the external device can be powered solely by the battery, the external load device can be used by supplying electric power thereto without driving the ,engine to drive the generator and thus while keeping silence during the electric driving of the hybrid vehicle or during stoppage of the vehicle.

In a hybrid vehicle according to a third aspect, in the above-described configuration, when the electric power generated by the generator, which is output to the external load device connecting section, exceeds the external load electric power, the controller supplies surplus electric power to the battery.

According to the above-described configuration, when the electric power generated by the generator on the basis of the power of the engine exceeds the external load device electric power, the surplus electric power is supplied to the battery, thereby allowing efficient use of the surplus electric power.

In a hybrid vehicle according to a fourth aspect, in the above-described configuration, the hybrid vehicle further includes a mode setting section for selectively setting between a running mode for enabling electric power to be supplied to the external load device during vehicle running, and a generator mode for causing electric power to be supplied to the external load device from at least one of the generator and the battery during vehicle stoppage; when the running mode is selected by the mode setting section, the controller supplies low-voltage DC electric power to the external load device connecting section as the supply electric power for the external load device, and when the generator mode is selected, the controller supplies one of low-voltage DC electric power and high-voltage AC electric power corresponding to the detected external load electric power to the external load connecting section as the supply electric power for the external load device.

According to the above-described structure, through selective setting between the running mode and the generator mode, during running of the vehicle, the electric power from at least one of the battery and generator is not supplied to the external load device as high-voltage AC electric power while being supplied to the external device as a low-voltage direct current. Accordingly, during running of the vehicle, the external load device can be used by supplying the low-voltage direct current to the external device without impairing the supplied electric power to the motor used during the vehicle running.

The hybrid vehicle according to the present embodiments provides superior fuel economy with relatively low emissions of environmental pollutants and makes it possible to use an external load device without mounting a generator dedicated to the external load device. The hybrid vehicle can be thus suitably used as a hybrid two-wheeled vehicle.

A hybrid vehicle according to the present embodiments includes: an engine; a generator for generating electric power using power of the engine; a battery for storing the electric power generated by the generator; a motor for generating power using electric power from at least one of the generator and the battery; a drive wheel rotationally driven by the power of the motor; an external load device connecting section to which an external load device is connected; and a controller for adjusting the electric power from at least one of the generator and the battery and outputting the electric power to the external load device connecting section as supply electric power for the external load device.

According to the above-described configuration, in the hybrid vehicle in which the motor generates power by means of the electric power from at least one of the generator, which generates electric power due to the drive of the engine, and the battery for storing the electric power generated by the generator, and the drive wheels are rotationally driven by the power of the motor to thereby cause the hybrid vehicle to run, the electric power from at least one of the generator and the battery, which causes the battery that rotationally drives the drive wheels to generate power, is adjusted and supplied via the external load device connecting section to the external load device connected to the external load device connecting section.

That is, the electric power from at least one of the generator and battery is adjusted and supplied to the external load device connected to the external load device connecting section, thereby enabling use of the external load device.

As described above, the present teaching enables an external load device to be used in a hybrid vehicle, which is superior to an engine-driven vehicle that runs by being directly driven from the engine from the environmental point of view. Accordingly, an external device such as lighting can be used on an outing site such as a campsite by simply moving the vehicle to that site.

Further, according to the above-described structure, there is no need to mount a generator dedicated to the external load device in addition to the generator used for the running of the vehicle, whereby, unlike in the related art, a two-wheeled vehicle with limited mounting space can be implemented as a hybrid vehicle without causing a deterioration in running performance or maneuverability.

Further, in the above-described configuration, a configuration may also be adopted in which the hybrid vehicle further includes an external load detecting section for detecting an external load electric power due to the external load device, and a stored capacity detecting section for detecting a stored capacity of the battery, and in which when the stored capacity of the battery detected by the stored capacity detecting section is sufficient for the external load electric power detected by the external load detecting section, the controller outputs the electric power of the battery to the external load connecting section as the supply electric power for the external load device, and when the stored capacity of the battery is not sufficient for the external load electric power, the controller drives the engine and outputs electric power generated by the generator to the external load connecting section as the supply electric power for the external load device.

According to the above-described configuration, when the stored capacity of the battery is sufficient for the external load electric power due to the external load device, the electrical load device connected to the external load device connecting section can be used solely on the basis of the electric power from the battery; when the stored capacity of the battery is not sufficient for the external load electric power due to the external load device, the engine is driven and electric power generated by the generator is output to the external load device as the supply electric power, thereby compensating for the deficiency of electric power when using the external load device.

Accordingly, by adjusting the electric power from at least one of the generator and battery, in the vehicle running state where electric power supply to the motor is maintained or in the vehicle stopped state with no supply of electric power to the motor, when the stored capacity of the battery is sufficient for the external load electric power due to the external load device, the electric power generated by the generator is not output as the supply electric power for the external load device. Therefore, in the case where the external device can be powered solely by the battery, the external load device can be used by supplying electric power thereto without driving the engine to drive the generator and thus while keeping silence during the electric driving of the hybrid vehicle or during stoppage of the vehicle.

As described above, according to the present embodiments, an external device such as lighting can be used on an outing site such as a campsite by simply moving the vehicle to that site, and the hybrid vehicle can be implemented also as a two-wheeled vehicle. Further, electric power can be supplied to the external load device without driving the engine and thus while keeping silence.

The description above discloses as a particularly preferred embodiment, in order to provide a hybrid vehicle which allows an external device such as lighting to be used on an outing site or the like such as a campsite by simply moving the vehicle to that site and which can also be implemented as a two-wheeled vehicle, a hybrid vehicle comprising a generator 210 generating electric power due to the power of an engine 220, and a battery 300 which is charged with the power generated by the generator 210, a drive motor 240 generating power due to the electric power from at least one of the generator 210 and battery 300, and rotationally drives the drive wheels, an external device 150 which is connected to a socket 500, and a controller 400 which adjusts the electric power from at least one of the generator 210 and battery 300 and outputs it to the socket 500 as the electric power to be supplied to the external device 150.

Amongst others, the description discloses an embodiment of a hybrid vehicle comprising an engine; a generator for generating electric power using power of the engine; a battery for storing the electric power generated by the generator; a motor for generating power using electric power from at least one of the generator and the battery; a drive wheel rotationally driven by the power of the motor; an external load device connecting section to which an external load device is connected; and a controller for adjusting the electric power from at least one of the generator and the battery and outputting the electric power to the external load device connecting section as supply electric power for the external load device.

There is further disclosed an embodiment of the hybrid vehicle further comprising an external load detecting section for detecting an external load electric power due to the external load device; and a stored capacity detecting section for detecting a stored capacity of the battery, wherein when the stored capacity of the battery detected by the stored capacity detecting section is sufficient for the external load electric power detected by the external load detecting section, the controller outputs the electric power of the battery to the external load connecting section as the supply electric power for the external load device, and when the stored capacity of the battery is not sufficient for the external load electric power, the controller drives the engine and outputs electric power generated by the generator to the external load connecting section as the supply electric power for the external load device.

Preferably, when the electric power generated by the generator, which is output to the external load device connecting section, exceeds the external load electric power, the controller supplies surplus electric power to the battery.

Another embodiment of the hybrid vehicle further comprises a mode setting section for selectively setting between a running mode for enabling electric power to be supplied to the external load device during vehicle running, and a generator mode for causing electric power to be supplied to the external load device from at least one of the generator and the battery during vehicle stoppage, wherein when the running mode is selected by the mode setting section, the controller supplies low-voltage DC electric power to the external load device connecting section as the supply electric power for the external load device, and when the generator mode is selected, the controller supplies one of low-voltage DC electric power and high-voltage AC electric power corresponding to the detected external load electric power to the external load connecting section as the supply electric power for the external load device.

## Claims

1. Hybrid vehicle (100) comprising an engine (220), a generator (210) for generating electric power using power of the engine (220), a battery (300) for storing the electric power generated by the generator (210), a motor (240) for generating power using electric power from at least one of the generator (210) and the battery (300) to drive a drive wheel (102), an external output terminal (500) to which an external device (116) located outside of the vehicle is connectable and provided with an insertion detecting switch for detecting an insertion; a controller (400) configured to adjust the electric power from at least one of the generator (210) and the battery (300) and to output the electric power to the external output terminal (500) as supply electric power for the external device (116).

2. Hybrid vehicle (100) according to claim 1, further comprising an external load detecting section (410) for detecting an external load electric power due to the external device (116), and a stored capacity detecting section (312) for detecting a stored capacity of the battery (300), wherein, when the stored capacity of the battery (300) detected by the stored capacity detecting section (312) is sufficient for the external load electric power detected by the external load detecting section (410), the controller (400) is configured to output the electric power of the battery (300) to the external output terminal (500) as the supply electric power for the external device (116), and, when the stored capacity of the battery (300) is not sufficient for the external load electric power, the controller (400) is configured to drive the engine (220) and to output electric power generated by the generator (210) to the external output terminal (500) as the supply electric power for the external device (116).

3. Hybrid vehicle (100) according to claim 1 or 2, wherein, when the electric power generated by the generator (210), which is output to the external output terminal (500), exceeds the external load electric power, the controller (400) is configured to supply surplus electric power to the battery (300).

4. Hybrid vehicle (100) according to one of the claims 1 to 3, further comprising a mode setting section for selectively setting between a running mode for enabling electric power to be supplied to the external device (116) during vehicle running, and a generator mode for causing electric power to be supplied to the external device (116) from at least one of the generator (210) and the battery (300) during vehicle stoppage.

5. Hybrid vehicle (100) according to claim 4, wherein, when the running mode is selected by the mode setting section, the controller (400) is configured to supply low-voltage DC electric power to the external output terminal (500) as the supply electric power for the external device (116), and when the generator mode is selected, the controller (400) is configured to supply one of low-voltage DC electric power and high-voltage AC electric power corresponding to the detected external load electric power to the external output terminal (500) as the supply electric power for the external device (116).

6. Hybrid vehicle (100) according to one of the claims 1 to 5, wherein the controller (400) is configured to adjust the electric power from at least one of the generator (210) and battery (300) and to output it to the external output terminal (500) as the electric power to be supplied to the external device (116).

## Patentansprüche

1. Hybridfahrzeug (100), aufweisend eine Brennkraftmaschine (220), einen Generator (210) zum Erzeugen von elektrischer Leistung unter Verwendung der Leistung der Brennkraftmaschine (220), eine Batterie (300) zum Speichern der elektrischen Leistung, erzeugt durch den Generator (210), einen Motor (240) zum Erzeugen von Leistung unter Verwendung von elektrischer Leistung von zumindest einem von Generator (210) oder der Batterie (300), um ein Antriebsrad (102) anzutreiben, einen externen Ausgangsanschluss (500), an den eine externe Vorrichtung (116), angeordnet außerhalb des Fahrzeuges und versehen mit einem Einsetzerfassungsschalter zum Erfassen eines Einsetzens, verbindbar ist, eine Steuerung (400), konfiguriert, um die elektrische Leistung von zumindest einem von dem Generator (210) oder der Batterie (300) einzustellen und um die elektrische Leistung zu dem externen Ausgangsanschluss (500) als Zuführung von elektrischer Leistung für die externe Vorrichtung (116) auszugeben.

2. Hybridfahrzeug (100) nach Anspruch 1, außerdem aufweisend einen externe Last- Erfassungsabschnitt (410) zum Erfassen einer elektrischen Leistung der externen Last infolge der externen Vorrichtung (116) und einen gespeicherte Kapazität- Erfassungsabschnitt (312) zum Erfassen einer gespeicherten Kapazität der Batterie (300), wobei, wenn die gespeicherte Kapazität der Batterie (300), erfasst durch den gespeicherte Kapazität- Erfassungsabschnitt (312), für die elektrische Leistung der externen Last, erfasst durch den externe Last- Erfassungsabschnitt (410), ausreichend ist, die Steuerung (400) konfiguriert ist, die elektrische Leistung der Batterie (300) zu dem externen Ausgangsanschluss (500) als die Zuführung von elektrischer Leistung für die externe Vorrichtung (116) auszugeben, und wenn die gespeicherte Kapazität der Batterie (300) für die elektrische Leistung der externen Last nicht ausreichend ist, konfiguriert ist, die Brennkraftmaschine (220) anzutreiben und elektrische Leistung, erzeugt durch den Generator (210), an den externen Ausgangsanschluss (500) als die Zuführung von elektrischer Leistung an die externe Vorrichtung (116) auszugeben.

3. Hybridfahrzeug (100) nach Anspruch 1 oder 2, wobei, wenn die elektrische Leistung, erzeugt durch den Generator (210), die an den externen Ausgangsanschluss (500) abgegeben wird, die elektrische Leistung der externen Last überschreitet, die Steuerung (400) konfiguriert ist, den Überschuss an elektrischer Leistung an die Batterie (300) zuzuführen.

4. Hybridfahrzeug (100) nach einem der Ansprüche 1 bis 3, außerdem aufweisend einen Modusfestlegungsabschnitt zum wahlweise Festlegen zwischen einem Fahrmodus, um der elektrischen Leistung zu ermöglichen, zu der externen Vorrichtung (116), während das Fahrzeug fährt, zugeführt zu werden und einem Generatormodus, um die elektrische Leistung zu veranlassen, zu der externen Vorrichtung (116) von zumindest einem von dem Generator (210) oder der Batterie (300), während das Fahrzeug stoppt, zugeführt zu werden.

5. Hybridfahrzeug (100) nach Anspruch 4, wobei, wenn der Fahrmodus durch den Modusfestlegungsabschnitt ausgewählt ist, die Steuerung (400) konfiguriert ist, Niedrigspannung- Gleichstrom- elektrische Leistung zu dem externen Ausgangsanschluss (500) als Zuführung von elektrischer Leistung für die externe Vorrichtung (116) zuzuführen, und wenn der Generatormodus ausgewählt ist, die Steuerung (400) konfiguriert ist, eine von einer Niedrigspannung- Gleichstrom- elektrische Leistung oder Hochspannung- Wechselstrom- elektrische Leistung entsprechend der erfassten elektrischen Leistung der externen Last zu dem externen Ausgangsanschluss (500) als die Zuführung von elektrischer Leistung für die externe Vorrichtung (116) zuzuführen.

6. Hybridfahrzeug (100) nach einem der Ansprüche 1 bis 5, wobei die Steuerung (400) konfiguriert ist, die elektrische Leistung von zumindest einem von dem Generator (210) oder der Batterie (300) einzustellen und sie zu dem externen Ausgangsanschluss (500) als die elektrischer Leistung auszugeben, die zu der externen Vorrichtung (116) zugeführt werden soll.

## Revendications

1. Véhicule hybride (100) comprenant un moteur à combustion interne (220), une génératrice (210) pour générer de l'énergie électrique en utilisant la puissance du moteur à combustion interne (220), une batterie (300) pour stocker l'énergie électrique générée par la génératrice (210), un moteur (240) pour générer de la puissance en utilisant l'énergie électrique provenant d'au moins l'une parmi la génératrice (210) ou la batterie (300) pour entraîner une roue motrice (102), une borne de sortie externe (500) à laquelle un dispositif externe (116) situé à l'extérieur du véhicule peut être connecté et pourvue d'un commutateur de détection d'insertion pour détecter une insertion, un contrôleur (400) configuré pour ajuster l'énergie électrique provenant d'au moins l'une parmi la génératrice (210) ou la batterie (300) et pour délivrer l'énergie électrique à la borne de sortie externe (500) en tant qu'énergie électrique d'alimentation pour le dispositif externe (116).

2. Véhicule hybride (100) selon la revendication 1, comprenant en outre une section de détection de charge externe (410) pour détecter une charge externe d'énergie électrique due au dispositif externe (116), et une section de détection de capacité stockée (312) pour détecter une capacité stockée de la batterie (300), dans lequel, lorsque la capacité stockée de la batterie (300) détectée par la section de détection de capacité stockée (312) est suffisante pour charge externe d'énergie électrique détectée par la section de détection de charge externe (410), le contrôleur (400) est configuré pour délivrer l'énergie électrique de la batterie (300) à la borne de sortie externe (500) en tant qu'énergie électrique d'alimentation pour le dispositif externe (116), et, lorsque la capacité stockée de la batterie (300) n'est pas suffisante pour la charge externe d'énergie électrique, le contrôleur (400) est configuré pour commander le moteur à combustion interne (220) et pour délivrer l'énergie électrique générée par la génératrice (210) à la borne de sortie externe (500) en tant qu'énergie électrique d'alimentation pour le dispositif externe (116).

3. Véhicule hybride (100) selon la revendication 1 ou 2, dans lequel, lorsque l'énergie électrique générée par la génératrice (210), qui est délivrée à la borne de sortie externe (500), dépasse l'énergie électrique de charge externe, le contrôleur (400) est configuré pour fournir de l'énergie électrique en surplus à la batterie (300).

4. Véhicule hybride (100) selon l'une des revendications 1 à 3, comprenant en outre une section d'établissement de mode pour établir de manière sélective un mode de fonctionnement pour permettre la fourniture d'énergie électrique au dispositif externe (116) pendant le fonctionnement du véhicule, et un mode générateur pour que l'énergie électrique soit fournie au dispositif externe (116) à partir de l'une parmi la génératrice (210) ou la batterie (300) pendant l'arrêt du véhicule.

5. Véhicule hybride (100) selon la revendication 4, dans lequel, lorsque le mode de fonctionnement est sélectionné par la section d'établissement de mode, le contrôleur (400) est configuré pour fournir une énergie électrique continue basse tension à la borne de sortie externe (500) en tant qu'énergie électrique d'alimentation pour le dispositif externe (116), et lorsque le mode de génératrice est sélectionné, le contrôleur (400) est configuré pour fournir l'une d'une énergie électrique continue basse tension et d'une énergie électrique alternative haute tension pour correspondre à l'énergie électrique de charge externe détectée à la borne de sortie externe (500) en tant qu'énergie électrique d'alimentation pour le dispositif externe (116).

6. Véhicule hybride (100) selon l'une des revendications 1 à 5, dans lequel le contrôleur (400) est configuré pour ajuster l'énergie électrique provenant d'au moins l'une de la génératrice (210) et de la batterie (300) et pour la délivrer à la borne de sortie externe (500) en tant qu'énergie électrique à fournir au dispositif externe (116).
